(19) Europäisches Patentamt
European Patent Office
Office européen des brevets

(11) **EP 1 916 449 B1**

(12) **EUROPEAN PATENT SPECIFICATION**

(45) Date of publication and mention
of the grant of the patent:
**28.12.2011 Bulletin 2011/52**

(51) Int Cl.:
**F16H 25/24** *(2006.01)*      **F16H 25/22** *(2006.01)*

(21) Application number: **06757381.6**

(22) Date of filing: **16.06.2006**

(86) International application number:
**PCT/JP2006/312097**

(87) International publication number:
**WO 2007/004404 (11.01.2007 Gazette 2007/02)**

(54) **ROLLER SCREW AND METHOD OF PRODUCING THE SAME**

ROLLENSPINDEL UND HERSTELLUNGSVERFAHREN DAFÜR

VIS À ROULEAU ET PROCÉDÉ POUR LA FABRIQUER

(84) Designated Contracting States:
**DE IT**

(30) Priority: **30.06.2005   JP 2005192241**

(43) Date of publication of application:
**30.04.2008   Bulletin 2008/18**

(73) Proprietor: **THK CO., LTD.**
**Shinagawa-ku,**
**Tokyo 141-8503 (JP)**

(72) Inventors:
 • **UESUGI, Masakazu**
  **Shinagawa-ku,**
  **Tokyo 1418503 (JP)**
 • **NISHIMURA, Kentaro**
  **Shinagawa-ku,**
  **Tokyo 1418503 (JP)**

 • **FUJITA, Satoshi**
  **Shinagawa-ku,**
  **Tokyo 1418503 (JP)**
 • **YOSHIDA, Akimasa**
  **Shinagawa-ku,**
  **Tokyo 1418503 (JP)**
 • **NAGAI, Satoru**
  **Shinagawa-ku,**
  **Tokyo 1418503 (JP)**
 • **ARAI, Hiroyuki**
  **Shinagawa-ku,**
  **Tokyo 1418503 (JP)**

(74) Representative: **Grünecker, Kinkeldey,**
**Stockmair & Schwanhäusser**
**Leopoldstrasse 4**
**80802 München (DE)**

(56) References cited:
  **JP-A- 2001 241 527     US-A- 3 329 036**
  **US-A- 3 329 036     US-A1- 2001 017 062**

## Description

### TECHNICAL FIELD

The present invention relates to a roller screw having a screw shaft, a nut and rollers rotatably disposed therebetween, according to the preamble of claim 1 as it is disclosed in YS 2001/017062 A1.

### BACKGROUND ART

A ball screw having balls rotatably disposed between a screw shaft and a nut has been in the actual use in various fields such as a positioning mechanism of a machine tool, a vehicle steering, a guide device, a motion screw and the like, since the ball screw enables reduction of a friction coefficient in rotating the screw shaft relative to the nut, as compared with a sliding contact-type screw. In the ball screw, the screw shaft has a spiral ball rolling groove formed thereon and the nut also has a ball rolling groove formed thereon. The ball rolling groove of the screw shaft and the ball rolling groove of the nut are aligned to form a path, in which a plurality of balls is arranged. In the nut, there is formed a circulation path for circulating the balls.

Meanwhile, recently in order to increase the allowable load, there is devised a roller screw using rollers as rolling elements, instead of balls, which is disclosed in JP11210858. In this roller screw, the screw shaft has, instead of the ball rolling groove, a roller rolling groove formed thereon for rolling the rollers, and the nut also has a roller rolling groove formed thereon for rolling the rollers. As each of the rollers is in line contact with the roller rolling grooves, the allowable load of the roller screw can be made higher than that of the ball screw in which each ball is in point contact with the ball rolling grooves.

The rollers are arranged in the roller rolling path in various ways. For example, the patent document 1 discloses a roller arranging method of cross-arranging rollers in such a manner that each adjacent two of the rollers in the roller circulation path have their axis lines orthogonal to each other. With this method, the rollers can be subjected to both a load in one direction along the axis of the screw shaft and a load in the other direction. Besides, the applicant has proposed another roller arranging method of arranging rollers in the roller rolling path in such a way that an outward-loaded roller group that bears a load in one direction along the axis of the screw shaft and a return-loaded roller group that bears a load in the other direction along the axis of the screw shaft are arranged separately along the axis of the screw shaft (see US 2001/017062 A1, page 1).

### DISCLOSURE OF THE INVENTION

### PROBLEMS TO BE SOLVED BY THE INVENTION

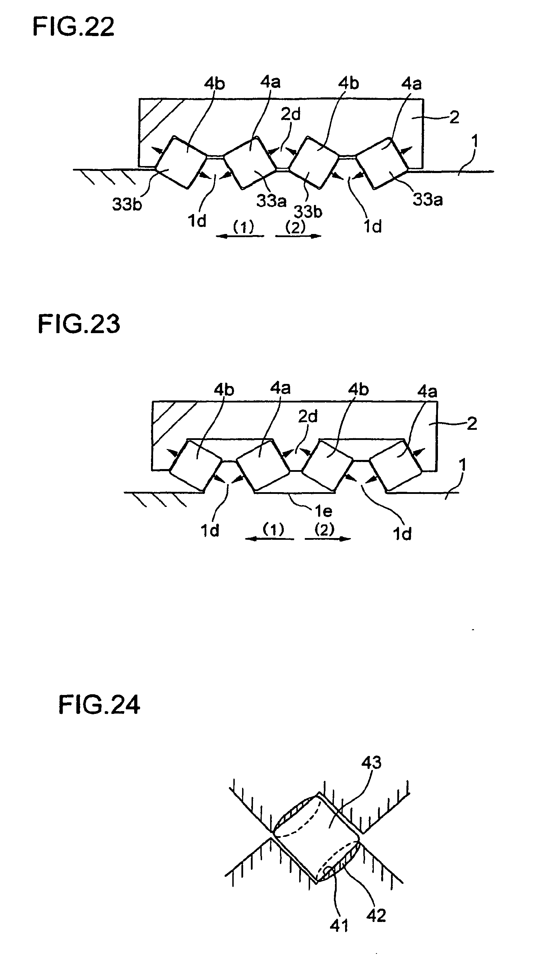

However, when the rollers are cross-arranged in the roller rolling path, an end surface of a roller moves on one wall surface of the roller rolling groove on which an adjacent roller rolls. For this structure, the end surface of the roller sometimes interferes with the wall surface of the roller rolling groove. In fact, when rollers are moved at a fixed lead on the three-dimensional CAD and then removed from the roller rolling path, there sometimes occurs a depression 42 on one wall surface of the roller rolling groove 41, which is illustrated in Fig. 24. If the depression 42 occurs on the wall surface of the roller rolling groove 41, the side surface of a roller next to the roller 43 shown in Fig. 24 rolls on the wall surface where the depression is formed, which causes shortening of a contact length between the side surface of the roller and the wall surface of the roller rolling groove 41.

Here, if a roller of short axial length is used, it is possible to prevent the end surface of the roller from interfering with the wall surface of the roller rolling groove. However, use of the roller of short axial length may lead to proportionate reduction of the allowable load of the roller. When the lead of the roller screw is longer, the length of the roller has to be more shortened.

The same problem as in the case of rollers cross-arranged in the roller rolling path as disclosed in the patent document 1 also comes up in the case where the outward-loaded roller group and the return-loaded roller group are arranged separate from each other in the roller rolling path as disclosed in the patent document 2. This is because both of the outward-loaded roller group and the return-loaded roller group roll on one roller rolling groove of the screw shaft.

Therefore, the present invention has an object to provide a roller screw which bears loads in both directions along the axis of the screw shaft and which is also capable of preventing interference between each roller end surface and roller rolling grooves.

### MEANS FOR SOLVING THE PROBLEMS

The present invention will now be described below. In the followings, reference numerals appearing in the accompanying drawings may be added in brackets to components for easy understanding of the present invention, however this is not for limiting the present invention to the modes shown in the drawings.

In order to solve the above-mentioned problems, the invention of claim 1 is a roller screw comprising: a screw shaft with an outer surface having two or more roller rolling surfaces spirally formed thereon; a nut with an inner surface having two or more roller rolling surfaces spirally formed thereon facing the respective roller rolling surfaces of the screw shaft; and a plurality of rollers arranged in two or more roller rolling paths formed between the roller rolling surfaces of the screw shaft and the respective roller rolling surfaces of the nut, wherein rollers of the plurality of rollers are parallel-arranged in a row in one roller rolling path of the roller rolling paths, rollers of the plurality of rollers are also parallel-arranged in a row in another roller rolling path of the roller rolling paths, the rollers arranged in the one roller rolling path bear a load in one direction along an axis of the screw shaft, the rollers arranged in the other roller rolling path bear a load in an opposite direction opposite to the one direction along the axis of the screw shaft, and the roller screw has a lead 1 and a pitch p expressed by an equation: 1 = n x p (n is an integer equal to or greater than 2).

The invention of claim 2 is characterized in that, in the roller screw of claim 1, in a cross section including the axis of the screw shaft, an angle formed by the axis of the screw shaft and an axis line of each of the rollers arranged in the one roller rolling path is different from an angle formed by the axis of the screw shaft and an axis line of each of the rollers arranged in the other roller rolling path.

The invention of claim 3 is characterized in that, in the roller screw of claim 1 or 2, each of the plurality of the rollers is cylindrically shaped, and in the cross section including the axis of the screw shaft, the angle formed by the axis of the screw shaft and the axis line of each of the rollers arranged in the one roller rolling path is set to an angle other than 45 degrees, and the angle formed by the axis of the screw shaft and the axis line of each of the rollers arranged in the other roller rolling path is set to an angle other than 45 degrees.

The invention of claim 4 is characterized in that, in the roller screw of any one of claims 1 to 3, a side surface of each of the rollers arranged in the one roller rolling path rolls on one wall surface of a thread formed on the outer surface of the screw shaft and a side surface of each of the rollers arranged in the other roller rolling path rolls on an opposite wall surface of the thread of the screw shaft, and the side surface of each of the rollers arranged in the one roller rolling path rolls on one wall surface of a thread formed on the inner surface of the nut and the side surface of each of the rollers arranged in the other roller rolling path rolls on an opposite wall surface of the thread of the nut.

The invention of claim 5 is characterized in that, in the roller screw of claim 4, between threads of at least one of the screw shaft and the nut, a cylindrical thread bottom is formed away from end surfaces of the rollers in the roller rolling paths.

The invention of claim 6 is a method of manufacturing a roller screw having a plurality of rollers arranged in two or more roller rolling paths formed between roller rolling surfaces of a screw shaft and respective roller rolling surfaces of a nut, comprising the steps of: parallel-arranging rollers of the plurality of rollers in a row in one roller rolling path of the roller rolling paths; parallel-arranging rollers of the plurality of rollers in a row in another roller rolling path of the roller rolling paths; subjecting the rollers in the one roller rolling path to a load in one direction along an axis of the screw shaft; and subjecting the rollers in the other roller rolling path to a load in an opposite direction opposite to the one direction along the axis of the screw shaft, wherein the roller screw has a lead 1 and a pitch expressed by an equation: 1 = n x (n is n integer equal 1 to or greater than 2).

EFFECTS OF THE INVENTION

According to the invention of claim 1, as the rollers are parallel-arranged in each roller rolling path, for example, a surface of the roller rolling groove (surface) close to an end surface of each roller can be recessed so as to prevent the end surface of the roller from interfering with the roller rolling groove (here, the surface of the roller rolling groove may not always be recessed). Besides, the rollers arranged in the one roller rolling path can be subjected to the load in one direction along the axis of the screw shaft and the rollers arranged in the other roller rolling path can be subjected to the load in the opposite direction along the axis of the screw shaft, thereby making it possible to bear the loads in both directions along the axis of the screw shaft.

According to the invention of claim 2, the roller screw can bear the different loads between outgoing movement and return movement.

According to the invention of claim 3, even if the roller diameter is limited to one size, the loads in the axial direction can be increased or decreased optionally.

According to the invention of claim 4, as the rollers roll on the both wall surfaces of one thread, the loads on the thread can be kept in balance.

According to the invention of claim 5, it is possible to prevent the end surface of each roller from interfering with the thread bottom. Besides, as the screw shaft and the nut each are of simple shape, the pre-stage machining (roughing) is simplified and evaluation of products, such as groove measuring, is well facilitated.

According to the invention of claim 6, as the rollers are parallel-arranged in each roller rolling path, for example, a surface of the roller rolling groove (surface) close to an end surface of each roller can be recessed so as to prevent the end surface of the roller from interfering with the roller rolling groove (here, the surface of the roller rolling groove may not always be recessed). Besides, the rollers arranged in the one roller rolling path can be subjected to the load in one direction along the axis of the screw shaft and the rollers arranged in the other roller rolling path can be subjected to the load in the opposite direction along the axis of the screw shaft, thereby making it possible to bear the loads in both directions along the axis of the screw shaft.

BRIEF DESCRIPTION OF THE DRAWINGS

Fig. 1 is a perspective view of a roller screw according to an embodiment of the present invention;

Fig. 2 is a side view of the above-mentioned roller screw;

Fig. 3 is a cross-sectional view taken along the axis of the screw shaft of the above-mentioned roller screw;

Fig. 4 is a front view of the above-mentioned roller screw;

Fig. 5 is a side view of a roller;

Fig. 6 is a side view of a roller arranged in a roller rolling path;

Fig. 7 is a view illustrating the screw shaft;

Fig. 8 is a perspective view of the screw shaft and the nut;

Fig. 9 is a side view of the screw shaft and the nut;

Fig. 10 is a front view of the screw shaft and the nut;

Fig. 11 is a perspective view illustrating circulation members mounted in the nut;

Figs. 12 (A) and 12 (B) are views each illustrating a center line of the raceway of a roller in one groove (Fig. 12(A) being a view seen in the axial direction of the screw shaft and Fig. 12(B) being a view seen from the side of the screw shaft);

Figs. 13 (A) and 13 (B) are views each illustrating a positional relation between a direction change path component attached to one end surface of the nut and a direction change path component attached to the other end surface of the nut (Fig. 13(A) being a front view of the nut and Fig. 13(B) being a cross-sectional view of the nut taken along the axis of the screw shaft);

Figs. 14 (A) and 14 (B) are views each illustrating an inner-side portion of a direction change path component (Fig. 14 (A) being a front view thereof and Fig. 14(B) being a side view thereof);

Figs. 15 (A) and 15 (B) are views each illustrating an inner-side portion of a direction change path component (Fig. 15 (A) being a side view thereof and Fig. 15(B) being a front view thereof);

Figs. 16 (A) and 16 (B) are views each illustrating an outer-side portion of a direction change path component (Fig. 16 (A) being a front view thereof and Fig. 16(B) being a side view thereof);

Figs. 17 (A) and 17 (B) are views each illustrating an outer-side portion of a direction change path component (Fig. 17 (A) being a side view thereof and Fig. 17(B) being a front view thereof);

Fig. 18 is a cross-sectional view of a pipe;

Fig. 19 is a view illustrating change in attitude of each roller moving in a straight-line raceway in the pipe;

Fig. 20 is a cross-sectional view illustrating a roller screw of the above-described embodiment in which the contact angle is set to 45 degrees;

Fig. 21 is a cross-sectional view of a roller screw in which the contact angle is different between rollers arranged in one roller rolling path and rollers arranged in the other roller rolling path;

Fig. 22 is a cross-sectional view illustrating a roller screw in which the contact angle is set to an angle other than 45 degrees;

Fig. 23 is a cross-sectional view of a roller screw of simple structure; and

Fig. 24 is a diagram illustrating interference between a cross-arranged roller and a roller rolling groove.

DESCRIPTION OF REFERENCE NUMERALS

1... screw shaft
1a, 1b... roller rolling groove (surface) of the screw shaft
1d... thread of the screw shaft
1e... thread bottom of the screw shaft
2... nut
2a, 2b... roller rolling groove (surface) of the nut
2d... thread of the nut
2e... thread bottom of the nut
3a, 3b... roller rolling path
32a, 32b... roller rolling path
33a, 33b... roller rolling path
4a, 4b... roller
6... side face of the roller
10a... roller axis line

BEST MODE FOR CARRYING OUT THE INVENTION

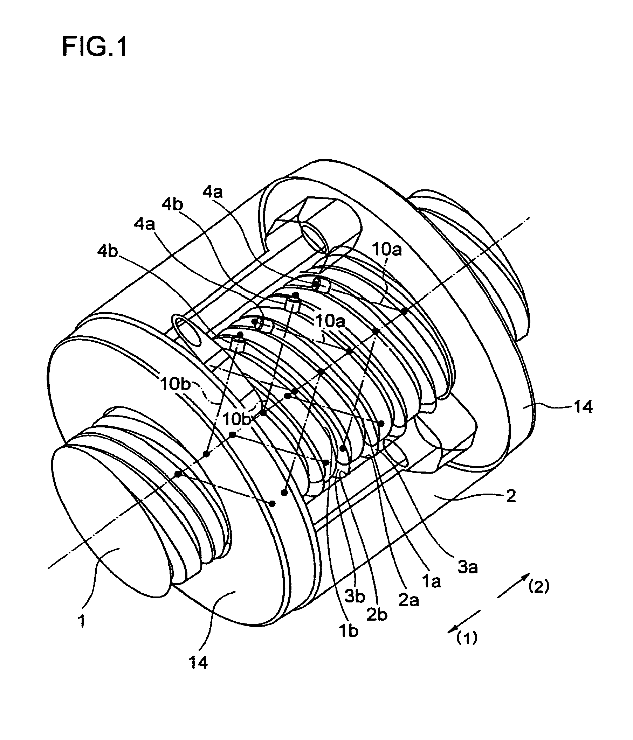

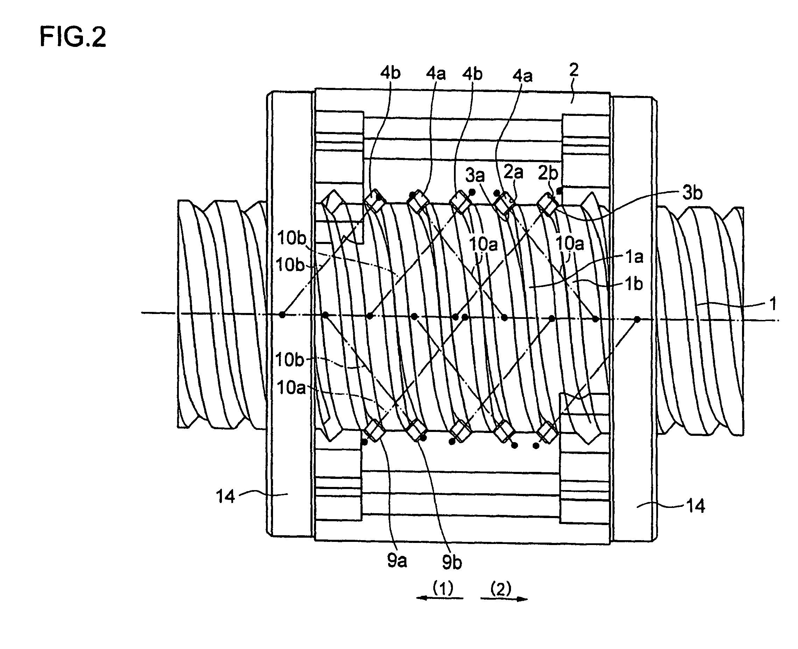

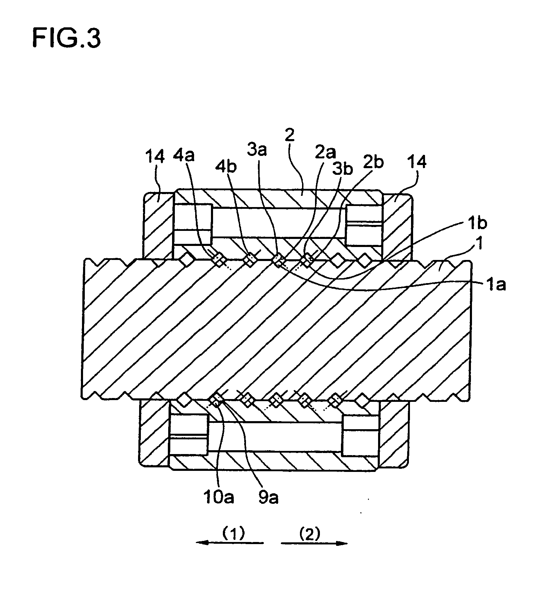

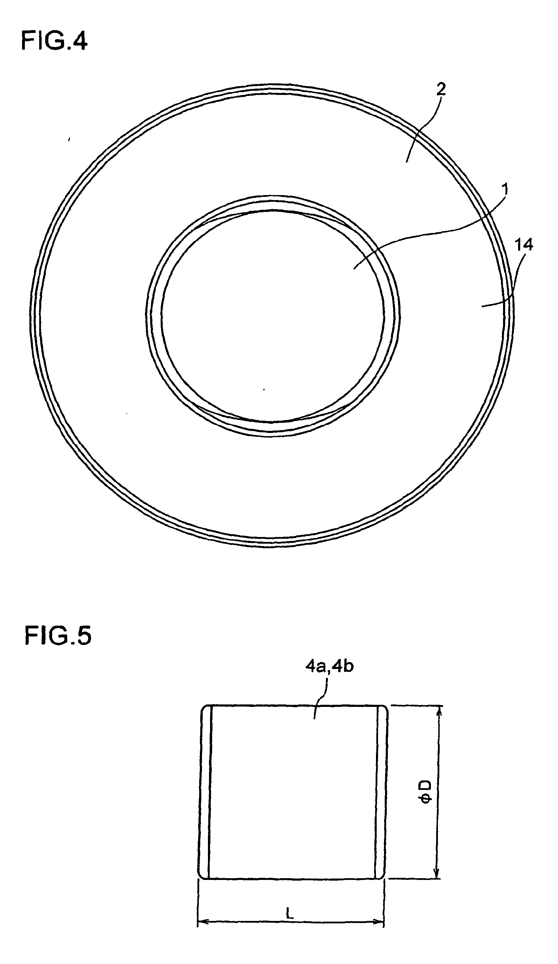

With reference to the attached drawings, a roller screw according to an embodiment of the present invention will now be described below. Figs. 1 to 4 each illustrate a roller screw according to the embodiment of the present invention. Fig. 1 is a perspective view of the roller screw, Fig. 2 is a side view thereof, Fig. 3 is a cross-sectional view thereof and Fig. 4 is a front view thereof. In Figs. 1 and 2, a nut is illustrated partially transparent so as to show rollers arranged in a roller rolling path. Also in Figs. 5 to 20, like reference numerals refer to like components.

The roller screw illustrated in Figs. 1 to 4 is a two-thread screw. On an outer surface of the screw shaft 1, two spiral roller rolling grooves 1a and 1b are formed in adjacent to each other. Also on an inner surface of the nut 2 two spiral roller rolling grooves 2a and 2b are formed. Besides, there is a relation "1 = 2 x p" between a lead "1" which is a travelling distance of the nut 2 along the axis of the screw shaft when the screw shaft is rotated one turn and a pitch "p" which is a distance between threads. Here, the roller screw can be a screw with two or more threads, for example, three-thread screw, four-thread screw or the like.

Between the roller rolling grooves 1a, 1b of the screw shaft 1 and the roller rolling grooves 2a, 2b, respectively, of the nut 2, there are formed two roller rolling paths 3a, 3b, respectively. Of the two roller rolling paths 3a and 3b, in the roller rolling path 3a there are arranged rollers 4a that bear a load in one direction (1) along the axis of the screw shaft 1. In this roller rolling path 3a, the plural rollers 4a are parallel-arranged in such a manner that every adjacent two of the rollers 4a have their axis lines approximately in parallel with each other when seen in the travelling direction of the rollers 4a. Such rollers 4a are arranged all over the roller rolling path, though in Fig. 1, one roller is only illustrated per turn.

Meanwhile, in the other roller rolling path 3b, rollers 4b are arranged that bear a load in the opposite direction (2) along the axis of the screw shaft 1. The rollers 4b are also parallel-arranged in the roller rolling path 3b in such a manner that every adjacent two of the rollers 4b have their axis lines approximately in parallel with each other when seen in the travelling direction of the rollers 4b.

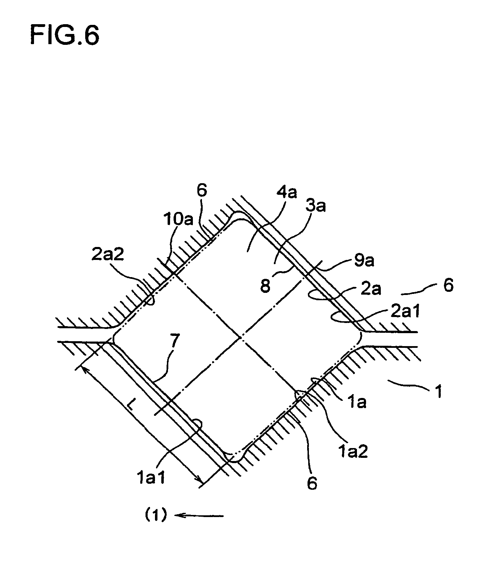

Next description is made about directions in which rollers 4a and 4b bear the loads. Fig. 5 illustrates a roller (4a, 4b) used in this embodiment. With regard to the roller shape, the roller (4a, 4b) is cylindrically shaped and has a length L and a diameter $\phi D$ which are approximately equal to each other. With this shape, the roller (4a, 4b) is approximately a square when seen from the side, and each of the roller rolling paths 3a and 3b where the rollers 4a and 4b roll, respectively, also has an approximately-square shaped cross section. Fig. 6 illustrates a roller 4a arranged in the roller rolling path 3a. The roller 4a is subjected to a load in such a manner that the side surface of the roller 4a is compressed between a wall surface 1a1 of the roller rolling groove 1a of the screw shaft 1 and a wall surface 2a1 of the roller rolling groove 2a of the nut 2 facing the wall surface 1a1. Meanwhile, there is a space created between an end surface 6 of the roller 4a and each of the wall surfaces 1a2 and 2a2. With this space created, the one roller 4a bears only the load in one direction (1) along the axis of the screw shaft 1. When a line orthogonal to both of a contact line 7 between the side surface of the roller 4a and the roller rolling groove 1a of the screw shaft 1 and a contact line 8 between the side surface of the roller 4a and the roller rolling groove 2a of the nut 2 is defined as a contact angle line 9a (the contact angle line 9a is orthogonal to the axis line 10a of the roller 4a), this contact angle line 9a indicates a direction of the load borne by the roller. The contact angle line 9a and the axis line 10a of the roller 4a are also shown in Figs. 1 and 2.

Thus in the roller screw of this embodiment, the plural rollers 4a arranged in the one roller rolling path 3a bear the load in the one direction (1) along the axis of the screw shaft 1, while the plural rollers 4b arranged in the other roller rolling path 3b bear the load in the opposite direction (2) along the axis of the screw shaft 1. This structure makes the roller screw very practical one that is capable of bearing the loads in the both directions along the axis of the screw shaft 1.

Here, description is made about why the rollers 4a and 4b are parallel-arranged. If the rollers 4a and 4b are cross-arranged in such a manner that the axis lines of adjacent two of the rollers are perpendicular to each other when seen in the travelling direction of the rollers 4a and 4b, the side surface of a roller rolls on a wall surface of the roller rolling groove and an end surface of another roller then moves on the same wall surface. As described above, when a long roller is used, an end surface of the roller interferes with the wall surface of the roller rolling groove. In order to prevent this interference, a roller of short axial length was conventionally used. However, when the rollers 4a and 4b are parallel-arranged in the respective roller rolling paths 3a and 3b, for example, the wall surfaces 1a2 and 2a2 adjacent to the end surfaces 6 of the roller 4a (see Fig. 6) can be recessed and this enables prevention of the interference between the end surfaces 6 of the roller 4a and the wall surfaces 1a2 and 2a2. Accordingly, the necessity to shorten the axial length of the roller 4a is eliminated. If the roller 4a is chamfered and prevented from interfering with the wall surfaces 1a2 and 2a2, the wall surfaces 1a2 and 2a2 adjacent to the end surfaces of the roller 4a may not be recessed.

Further, as the end surfaces 6 of the roller 4a only move on the one-side wall surfaces 1a2 and 2a2 of the respective roller rolling grooves 1a and 2a, the other wall surfaces 1a1 and 2a1 of the roller rolling groove 1a and 2a on which the side surface of the roller 4a rolls are kept from being adversely affected by sliding of the end surfaces 6 of the roller 4a. Furthermore, highly-accurate finishing is only required for the one-side wall surfaces 1a1 and 2a1 of the respective roller rolling grooves 1a and 2a on which the side surface of the roller 4a rolls.

As illustrated in Fig. 1, the axis lines of the rollers 4a and 4b cross the axis of the screw shaft 1. No matter where the rollers 4a and 4b are in the respective roller rolling paths 3a and 3b, the axis lines of the rollers 4a and 4b cross the axis of the screw shaft 1. With this structure, as the attitude of each of the rollers 4a and 4b is kept fixed, the rollers 4a and 4b are prevented from being tilted to be skewed when moving in the roller rolling paths 3a and 3b. As the rollers 4a and 4b are arranged in the roller rolling paths 3a and 3b, respectively, with the attitudes kept fixed, strictly speaking, the axis lines of adjacent two of the rollers 4a are not parallel with each other and also, the axis lines of adjacent two of the rollers 4b are not parallel with each other. However, seen in the travelling direction of the rollers 4a and 4b, the axis lines of the adjacent rollers 4a extend in the same direction and also, the axis lines of the adjacent rollers 4b extend in the same direction.

As illustrated in Figs. 1 and 2, there is a seal member 14 attached to each axial end of the nut 2 in order to prevent any foreign matters adhered to the surface of the screw shaft 1 from entering the inside of the nut 2 and to prevent any lubricant agent from leaking from the inside of the nut 2.

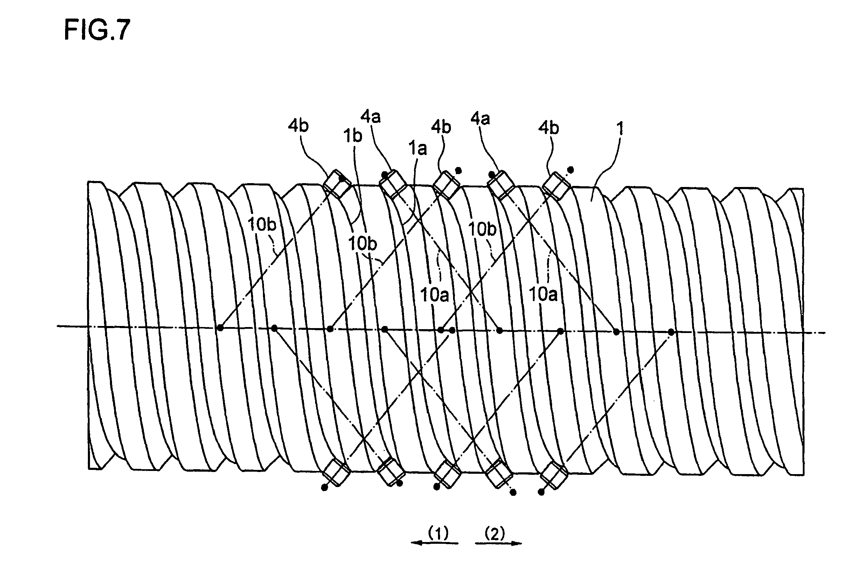

The following description is made about the structures the screw shaft 1 and the nut 2 of the roller screw. Fig. 7 illustrates the screw shaft 1. On the outer surface of the screw shaft 1, there are formed at a given lead, two spiral roller rolling grooves 1a and 1b of V-shaped cross sections. In the one roller rolling groove 1a, rollers 4a are parallel-arranged which bear the load in one direction (1) along the axis of the screw shaft 1, while in the other roller rolling groove 1b, rollers 4b are parallel-arranged which bear the load in the opposite direction (2) along the axis of the screw shaft 1.

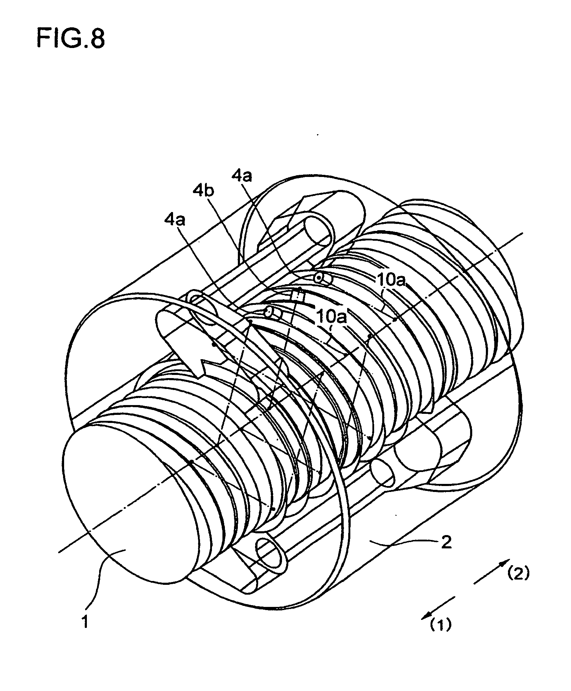

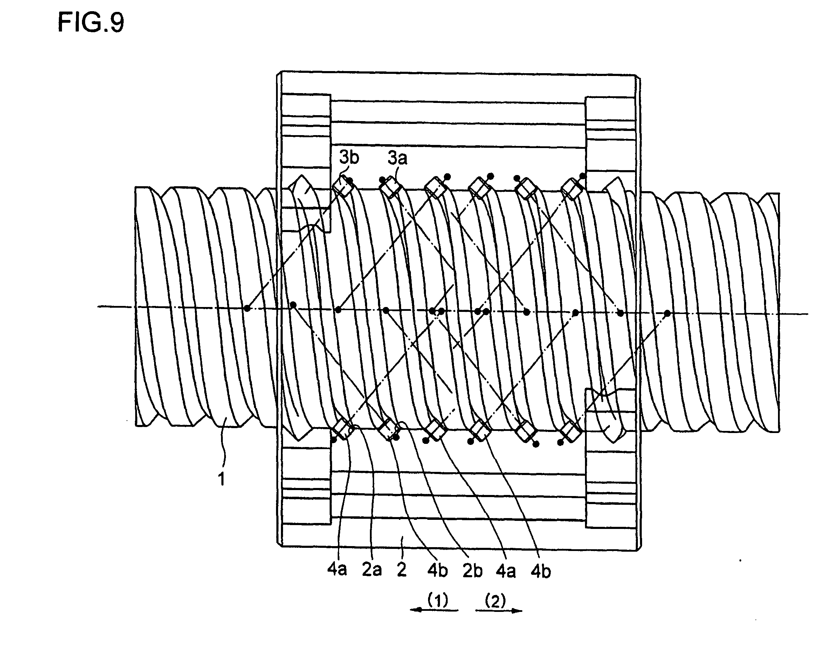

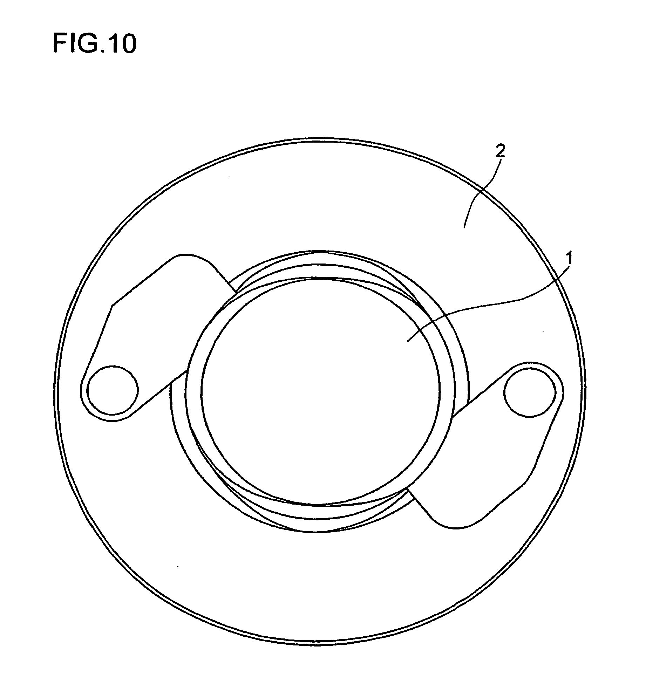

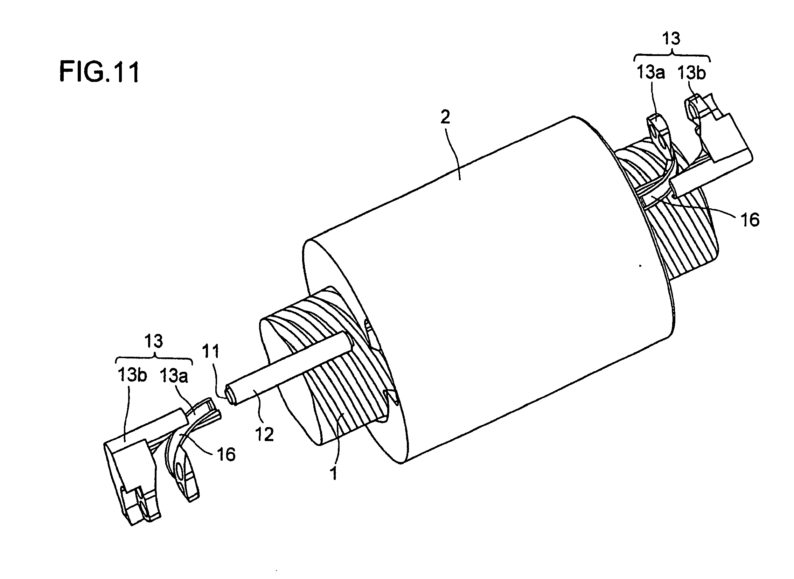

Figs. 8 to 10 each illustrate the screw shaft 1 and the nut 2. Fig. 8 is a perspective view of the screw shaft 1 and the nut 2, Fig. 9 is a side view thereof and Fig. 10 is a front view thereof. In nut 2, two spiral roller rolling grooves 2a and 2b of V-shaped cross sections are formed at a given lead, facing the roller rolling grooves 1a and 1b, respectively, of the screw shaft 1. In the one roller rolling groove 2a, the rollers 4a are parallel-arranged which bear the load in one direction (1) along the axis of the screw shaft 1, while in the other roller rolling groove 2b, the rollers 4b are parallel-arranged which bear the load in the opposite direction (2) along the axis of the screw shaft 1. When the nut 2 is rotated relative to the screw shaft 1, the plural rollers 4a and 4b move in the spiral roller rolling paths 3a and 3b, respectively. When the rollers 4a and 4b roll up to one end of the roller rolling paths 3a and 3b, respectively, the rollers 4a and 4b are returned several turns back to the other ends of the respective roller rolling paths 3a and 3b by circulation members 12 and 13 (see Fig. 11) mounted in the nut 2. As the roller screw of this embodiment is a two-thread roller screw, there are prepared two sets of circulation members 12 and 13. Figs. 8 to 10 illustrate the roller screws from which the circulation members 12 and 13 are removed.

Fig. 11 illustrates one set of the circulation members 12 and 13 mounted in the nut 2. The circulation members 12 and 13 include a pipe 12 extending in parallel with the axis of the nut 2 and a direction change path component 13 attached to each end of the pipe 12. In the nut 2, there are formed through holes along the axis of the screw shaft 1. The pipe 12 is inserted into each of the through holes. Inside the pipe 12, there is formed a straight-line raceway 11 of square cross section having a straight raceway. The direction change path component 13 is attached to each axial end surface of the nut 2. In this direction change path component, an arch-shaped curve raceway 16 is formed. The direction change path component 13 is comprised of two portions, that is, an inner-side portion 13a and an outer-side portion 13b. The inner-side portion 13a and the outer-side portion 13b of the direction change path component 13 are fit to each other to be positioned onto the end surface of the nut 2, and then, a flange portion of the direction change path component 13 is fastened to the end surface of the nut 2 by fastening means such as bolts. Each end of the pipe 12 is fit into the direction change path component 13. Thus, when the direction change path component 13 is fastened to the nut 2, the pipe 12 is also fastened to the nut 2.

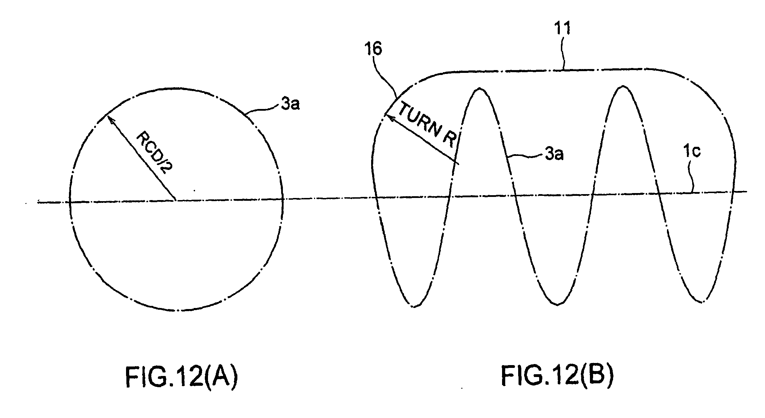

Figs. 12(A) and 12(B) each illustrate a center line of the raceway of each roller 4a circulating in one roller rolling path 3a, a circular-arch shaped curve raceway 16 and a straight-line raceway 11. Fig. 12(A) illustrates the raceway of the roller 4a moving in the roller rolling path 3a (seen in the axial direction of the screw shaft 1) and Fig. 12(B) illustrates the raceway of the roller 4a circulating in whole the endless circulation path (seen from the side of the screw shaft 1). The raceway of the roller 4a in the roller rolling path 3a is shaped like a circle having a radius of RCD/2 when seen in the axial direction of the screw shaft 1. The raceway of the roller 4a in the straight-line raceway 11 which is an unloaded roller return path is a straight line parallel with the axis 1c of the screw shaft 1. Besides, the raceway of the roller 4a in the curve raceway 16 is shaped like a circular arch having a curvature radius R.

Over each junction of these roller rolling path 3a, curve raceway 16 and the straight-line raceway 11, the tangential direction of the raceway of the roller 4a is continuously shifted. Specifically, at the junction between the roller rolling path 3a and the curve raceway 16, the tangential direction of the curve raceway 16 agrees with the tangential direction of the center line of the roller rolling path 3a when seen in the axial direction of the screw shaft 1. When seen from the side of the screw shaft 1, the tangential direction of the curve raceway 16 agrees with the lead angle of the roller rolling path 3a. Besides, at the junction between the straight-line raceway 11 and the curve raceway 16, the tangential direction of the curve raceway 16 agrees with the direction in which the center line of the straight-line raceway 11 extends.

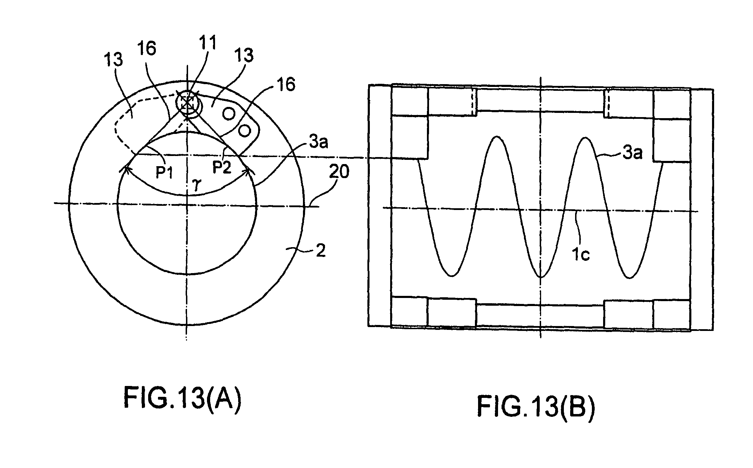

Figs. 13(A) and 13 (B) each show a positional relation between a direction change path component 13 attached to one end surface of the nut 2 and a direction change path component attached to the other end surface of the nut 2. As described above, the straight-line raceway 11 extends in parallel with the axis 1c of the screw shaft 1. As illustrated in Fig. 13 (A) , the curve raceway 16 extends in the tangential direction of the center line of the roller rolling path 3a when seen in the axial direction of the screw shaft 1. The center line of the near-side curve raceway 16 and the center line of the far-side curved raceway 16 cross each other at a given open angle $\gamma$. The straight-line raceway 11 makes the attitude of each roller 4a moving in the path rotated an angle $\gamma$ which is approximately equal to the given open angle, detailed description of which will be given later. Here, planes P1 and P2 including the curve raceway 16 (more precisely, planes including the center line of the curved raceway 16) are approximately in parallel with the axis 1c of the screw shaft 1.

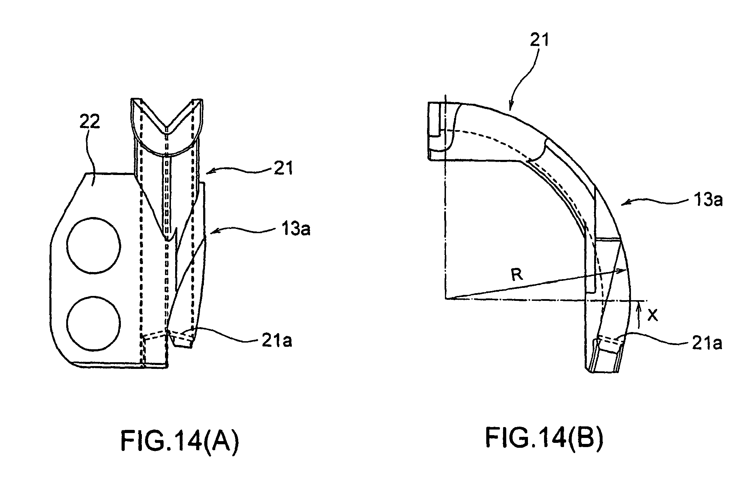

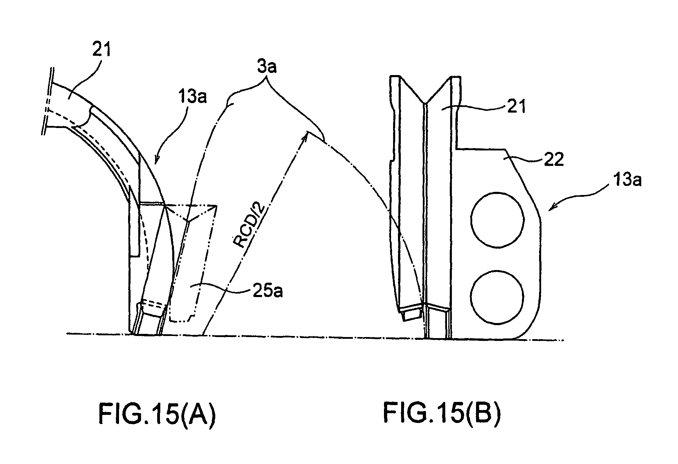

Figs. 14(A), 14(B), 15(A) and 15(B) each illustrate an inner-side portion 13a of the direction change path component 13. This inner-side portion 13a of the direction change path component has a main body 21 having the direction change path formed with a curvature radius of R and a flange portion 22 attached to the side of the nut 2. At an end of the main body 21, there is formed a scooping portion 21a for scooping up each roller 4a in the roller rolling path 3a. The other end of the main body 21 is fit into a pipe 12. The scooping portion 21a of the inner-side portion 13a scoops up each roller 4a, which rolls in the spiral roller rolling path 3a, in the tangential direction in cooperation with a scooping portion of an outer-side portion 13b. The curve raceway 16 operates to change the moving direction of each roller 4a immediately after the roller is scooped up and to make the roller move along the arch-shaped curve raceway 16.

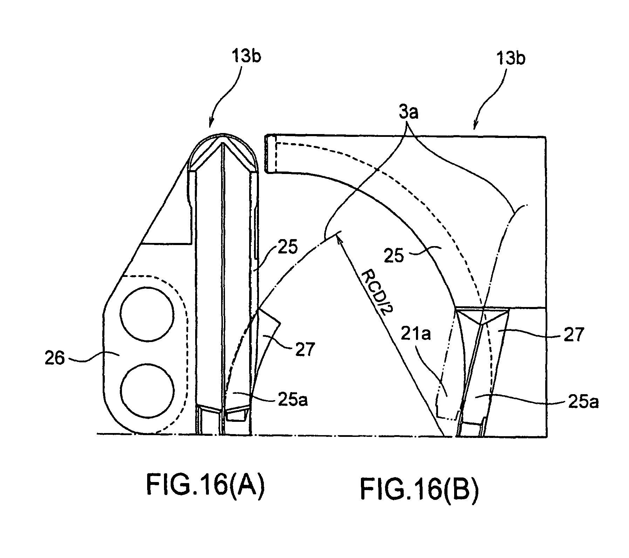

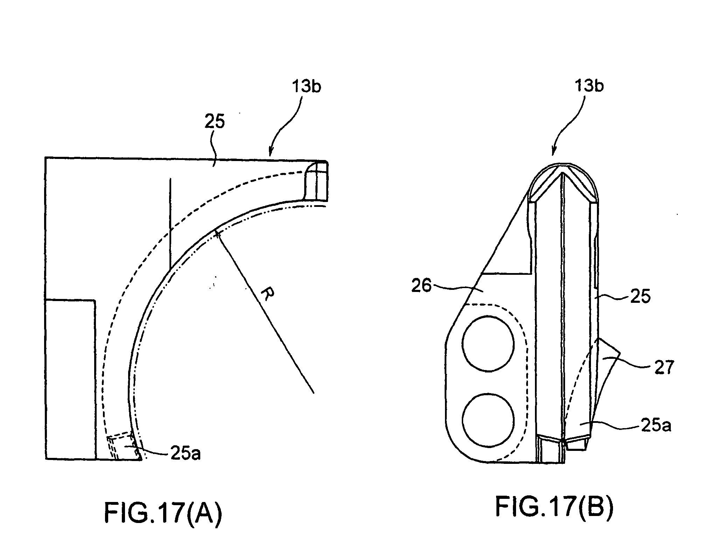

Figs. 16(A), 16(B), 17(A) and 17(B) each illustrate an outer-side portion 13b of the direction change path component 13. This outer-side portion 13b of the direction change path component has a main body 25 having the curve raceway 16 formed with a curvature radius of R and a flange portion 26 attached to the end surface of the nut 2. At an end of the main body 25, there is formed a scooping portion 25a for scooping up each roller in the roller rolling path 3a. The other end of the main body 25 is fit into the pipe 12. The scooping portion 25a of the outer-side portion 13b scoops up each roller 4a, which rolls in the spiral roller rolling path 3a, in the tangential direction in cooperation with the scooping portion 21a of the inner-side portion 13a. The arch-shaped curved raceway 16 operates to change the moving direction of each roller 4a immediately after the roller is scooped up and to make the roller move along the arch-shaped curved raceway 16. Besides, the outer-side portion 13b of the direction change path component 13 has a jutting portion 27 shaped conforming to the roller rolling groove 1a of the screw shaft 1, thereby ensuring the strength of the scooping portion 25a. The direction change path component 13 can be made of metal or resin.

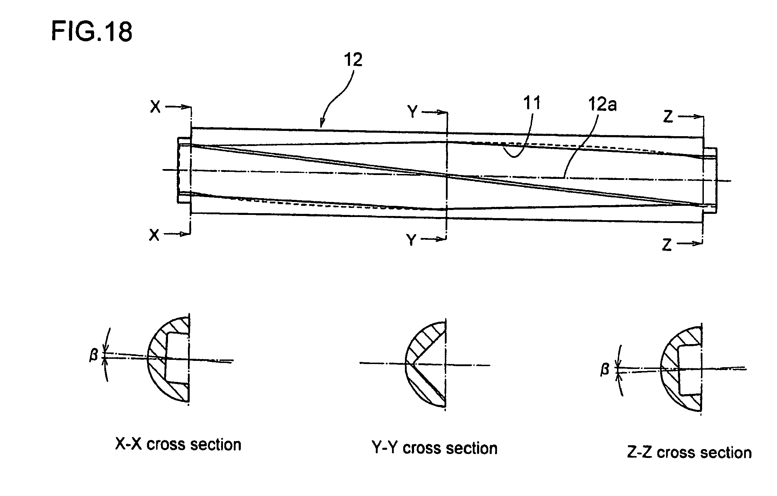

Fig. 18 illustrates a cross section of the pipe 12. The straight-line raceway 11 is twisted so that the attitude of the roller 4a is rotated while the roller 4a passes through the straight-line raceway 11. In other words, the roller 4a rotates about the center line 12a while moving along the center line 12a of the straight-line raceway 11. In this example, from one end of the straight-line raceway 11 up to the other end, the roller 4a rotates about 90 + 2$\beta$ degrees (the open angle $\gamma$ of the paired direction change paths seen in the axial direction of the screw shaft 1). The pipe 12 is divided into two along the center line.

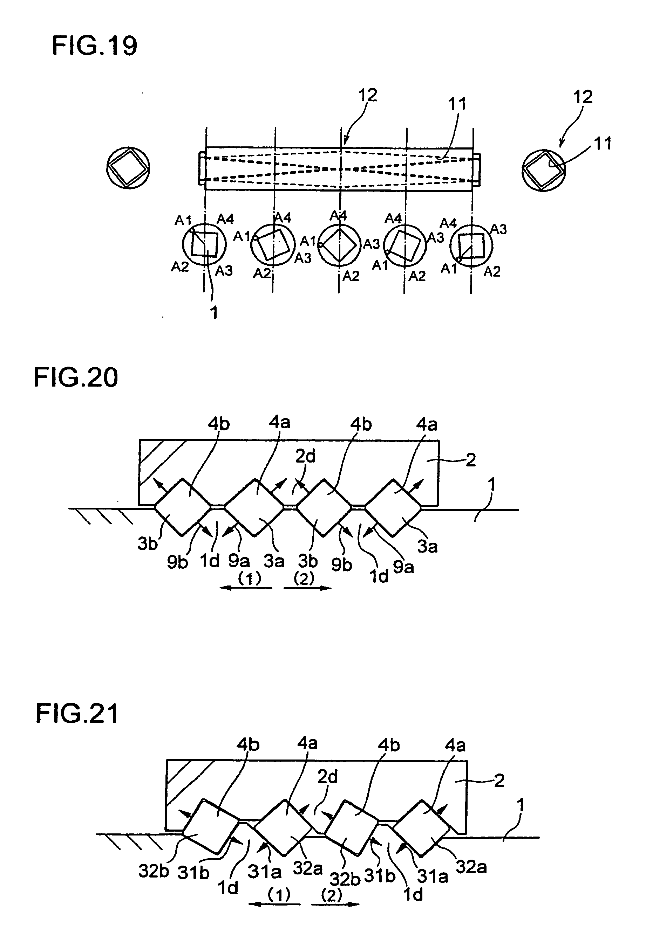

Fig. 19 illustrates change of the attitude of each roller 4a moving in the straight-line raceway 11. While the roller 4a moves in the straight-line raceway 11, the point A1 of the roller 4a moves from the obliquely upper left position to the obliquely lower left position and the attitude of the roller 4a rotates about 90 degrees as seen in the figure. As the attitude of the roller is rotated in the straight-line raceway 11, it is possible to make the attitude of the roller 4a having a quadrangular side surface conform to the quadrangular-cross-sectional shape of the roller rolling path 3a at both times when the roller 4a is scooped up from the roller rolling path 3a and when the roller is returned back to the roller rolling path 3a. In addition, the attitude of the roller 4a is rotated an angle which is approximately equal to the open angle $\gamma$ of the paired curve raceways 16, the roller under load in the direction (1) along the axis of the screw shaft 1 returns to the roller rolling path 3a without being inverted (returns in the state that the roller bears the load in the direction (1) along the axis of the screw shaft 1 again).

Here, in the above-described embodiment, description has been made about the circulation members 12, 13 and the roller rolling path 3a for circulating the rollers 4a, however, the same structure is provided in the circulation members 12, 13 and the roller rolling path 3b for circulating the rollers 4b.

Fig. 20 illustrates a roller screw of the above-described embodiment, in which a contact angle (angle formed by each of contact angle lines 9a and 9b and the axis of the screw shaft 1) is set to 45 degrees. In this case, as the contact angle line (9a, 9b) is orthogonal to the axis line of the roller (4a, 4b), the angle formed by the axis line of the roller (4a, 4b) and the axis of the screw shaft 1 is also 45 degrees. When the contact angle is set to 45 degrees, the load is equal between the outgoing path and the return path. However, if there is a request that the load be differentiated between the outgoing path and the return path, such a request is difficult to satisfy.

This problem can be solved by a roller screw as shown in Fig. 21. In this example, the contact angle (angle formed by the contact angle line (31a, 31b) and the screw shaft 1) is differentiated between rollers 4a arranged in one roller rolling path and rollers 4b arranged in the other roller rolling path. In other words, since the contact angle line (31a, 31b) is orthogonal to the axis line of each roller (4a, 4b), the angle formed by the axis line of each roller and the axis of the screw shaft 1 is differentiated between the rollers 4a arranged in the one roller rolling path and rollers 4b arranged in the other roller rolling path. Here, all the rollers 4a arranged in one roller rolling path 33a have the same contact angles while the rollers 4b arranged in the other roller rolling path 33b also have the same contact angles. However, the contact angle of each roller 4a and the contact angle of each roller 4b are different from each other. With this difference, the roller screw obtained can be subjected to different loads between the outgoing path and the return path.

As illustrated in Fig. 20, when the contact angle is set to 45 degrees, the load can be determined to be constant as far as the rollers 4a and 4b are of same diameter. When the contact angle is set to any angle other than 45 degrees, as shown in Fig. 22, the load can be changed, that is, increased or decreased, optionally. In this example, the contact angle of each roller 4a arranged in one roller rolling path 33a is identical to the contact angle of each roller 4b arranged in the other roller rolling path 33b, however, both of the contact angles are set to any angle other than 45 degrees.

In roller screws as illustrated in Figs.20 to 22, the side surface of each roller 4a arranged in the one roller rolling path (3a, 32a and 33a) rolls on one wall surface of a thread 1d formed on the outer surface of the screw shaft 1, and the side surface of each roller 4b arranged in the other roller rolling path (3b, 32b and 33b) rolls on the other (opposite) wall surface of the thread 1d. Besides, the side surface of each roller 4a arranged in the one roller rolling path (3a, 32a and 33a) rolls on one wall surface of a thread 2d formed on the inner surface of the nut 2, and the side surface of each roller 4b arranged in the other roller rolling path (3b, 32b and 33b) rolls on the other (opposite) wall surface of the thread 2d. Thus, as the rollers 4a and 4b move on the respective wall surfaces of each of the threads 1d and 2d, the loads applied to the threads 1d and 2d are kept in balance.

Fig. 23 illustrates a roller screw having a simpler structure than that of Fig. 20. Between threads 1d of the screw shaft, there is formed a cylindrical thread bottom 1e positioned away from the end surfaces of the rollers 4a and 4b arranged in the roller rolling paths. The thread bottom 1e has an outer diameter that is smaller than the outer diameter of the thread 1. The nut 2 also has thread bottoms 2e formed thereon. In this structure, the screw shaft 1 is formed such that the threads 1d jut from the surface of the round-bar screw shaft and the nut 2 is formed such that the threads 2d jut from the inner surface of the cylindrical nut. When the thread bottoms 1e and 2e are thus formed, it is possible to prevent the end surfaces of each roller (4a, 4b) from interfering with the nut. Besides, as the shapes of both the screw shaft 1 and the nut 2 are simpler, the pre-stage machining (roughing) is simplified and evaluation of products such as groove measuring is facilitated. Particularly, when the wall surfaces of the threads 1d and 2d are grinded, the thread bottoms 1e and 2e serve clearance for a grinding stone and therefore, the grinding is well facilitated.

The roller screw of the present invention is not limited to the above-described embodiment and can be embodied in various forms without departing from the scope of the present invention. For example, although the above-described embodiment treats a two-thread roller screw, a three-thread roller screw may be used such that rollers in one groove are subjected to a load in one direction along the axis of the screw shaft and rollers in the other grooves are subjected to a load in the opposite direction along the axis of the screw shaft. Besides, a four-thread roller screw can be used such that rollers in two grooves are subjected to a load in one direction along the axis of the screw shaft and rollers in the other grooves are subjected to a load in the opposite direction along the axis of the screw shaft. Further, a five-thread or more roller screw can be also used.

Further, the circulation member is not limited to an end-cap type circulation member as used in this embodiment and can be a return-pipe type circulation member or the like. Furthermore, through a roller used in this embodiment has a diameter and a length which are approximately equal to each other and the cross section of the unloaded roller return path is shaped like a square, a cylindrical roller of which the diameter and the length are different from each other can be used and the cross section of the unloaded roller return path can be shaped like a rectangle conforming to the shape of the roller. Still furthermore, the roller may be a circular-cone-shaped roller and the cross section of the unloaded roller return path may be shaped like a trapezoid conforming to the circular-cone shape of the roller. Still furthermore, there may be provided a retainer between each adjacent two of rollers so as to prevent contact between the rollers.

**Claims**

1. A roller screw comprising:

   a screw shaft (1) with an outer surface having two or more roller rolling surfaces spirally formed thereon;
   a nut (2) with an inner surface having two or more roller rolling surfaces (3a, 3b) spirally formed thereon facing the respective roller rolling surfaces of the screw shaft; and
   a plurality of rollers (4a, 4b) arranged in two or more roller rolling paths (3a, 3b) formed between the roller rolling surfaces of the screw shaft (1) and the respective roller rolling surfaces of the nut (2).
   wherein rollers (4a) of the plurality of rollers (4a, 4b) are parallel-arranged in a row in one roller rolling path (3a) of the roller rolling paths (3a, 3b).
   rollers (4b) of the plurality of rollers (4a, 4b) are also parallel-arranged in a row in another roller rolling path (3a, 3b) of the roller rolling paths (3a, 3b)
   the rollers (4a) arranged in the one roller rolling path (3a) bear a load in one direction along an axis of the screw shaft (1),
   the rollers (4b) arranged in the other roller rolling path (3b) bear a load in an opposite direction opposite to the one direction along the axis of the screw shaft (1) and
   the roller screw (1) has a a lead (1), which is a travelling distance of the nut (2) when the Screw shaft is rotated one turn and a pitch (p), which is a distance between threads expressed by an equation: 1 = n x p, wherein is an integer equal to or greater than 2.

2. The roller screw according to claim 1, wherein in a cross section including the axis of the screw shaft, an angle formed by the axis of the screw shaft (1) and an axis line (10a, 10b) of each of the roller (4a, 4b)arranged in the one roller rolling path (3a, 3b) is different from an angle formed by the axis of the screw shaft and an axis line (10a, 10b) of each of the rollers (4a, 4b) arranged in the other roller rolling path (3b, 3a).

3. The roller screw according to claim 1 or 2, wherein each of the plurality of the rollers (4a,4b) is cylindrically shaped, and
in the cross section including the axis of the screw shaft (1), the angle formed by the axis of the screw shaft and the axis line (10a, 10b) of each of the rollers (4a, 4b) arranged in the one roller rolling path (3a) is set to an angle other than 45 degrees, and the angle formed by the axis of the screw shaft and the axis line (10a, 10b) of each of the rollers (4a, 4b) arranged in the other roller rolling path (3a, 3b) is set to an angle other than 45 degrees.

4. The roller screw according to any one of claims 1 to 3, wherein
a side surface of each of the rollers arranged in the one roller rolling path (3a) rolls on one wall surface of a thread (1d, 2d) formed on the outer surface of the screw shaft and a side surface of each of the rollers arranged in the other roller rolling pat (3b) rolls on an opposite wall surface of the thread (1d,2d) of the screw shaft, and
the side surface of each of the rollers arranged in the one roller rolling path (3a) rolls on one wall surface of a thread (1d, 2d) formed on the inner surface of the nut (2) and the side surface of each of the rollers arranged in the other roller rolling path (3b) rolls on an opposite wall surface of the thread (1d, 2d) of the nut. (2)

5. The roller screw according to 4, wherein between threads (1d, 2d) of at least one of the screw shaft (1) and the nut (2), a cylindrical thread bottom (1e, 2e) is formed away from end surfaces of the rollers in the roller rolling paths.

6. A method of manufacturing a roller screw (1) having a plurality of rollers (4a, 4b) arranged in two or more roller rolling paths (3a, 3b) formed between roller rolling surfaces of a screw shaft and respective roller rolling surfaces of a nut, comprising the steps of:

   parallel-arranging rollers (4a) of the plurality of rollers (4a, 4b) in a row in one roller rolling path (3a) of the roller rolling paths (3a, 3b)
   parallel-arranging rollers (4b) of the plurality of rollers (4a,4b) in a row in another roller rolling path (3b) of the roller rolling paths (3a, 3b);
   subjecting the rollers (4a) in the one roller rolling path (3a) to a load in one direction along an axis of the screw shaft (1); and
   subjecting the rollers (4a) in the other roller rolling path (3b) to a load in an opposite direction opposite to the one direction along the axis of the screw shaft.
   wherein the roller screw (1) has a lead (1) which is a travelling distance of the nut (2) when the Screw shaft is rotated one turn and a pitch (p) which is a distance between threads expressed by an equation: 1 = n x p, wherein n is an integer equal to or greater than

**Patentansprüche**

1. Rollengewindetrieb, der umfasst:

   eine Gewindespindel (1) mit einer Außenfläche, an der zwei oder mehr Rollen-Rollflächen spiralförmig ausgebildet sind;
   eine Mutter (2) mit einer Innenfläche, an der zwei oder mehr Rollen-Rollflächen (3a, 3b) den jeweiligen Rollen-Rollflächen der Gewindespindel zugewandt spiralförmig ausgebildet sind; und
   eine Vielzahl von Rollen (4a, 4b), die in zwei oder mehr Rollen-Rollwegen (3a, 3b) angeordnet sind, die zwischen den Rollen-Rollflächen der Gewindespindel (1) und den entsprechenden Rollen-Rollflächen der Mutter (2) ausgebildet sind,
   wobei Rollen (4a) der Vielzahl von Rollen (4a, 4b) parallel in einer Reihe auf einem Rollen-Rollweg (3a) der Rollen-Rollwege (3a, 3b) angeordnet sind,
   Rollen (4b) der Vielzahl von Rollen (4a, 4b) des Weiteren parallel in einer Reihe auf einem anderen Rollen-Rollweg (3b) der Rollen-Rollwege (3a, 3b) angeordnet sind,
   die Rollen (4a), die auf dem einen Rollen-Rollweg (3a) angeordnet sind, eine Last in einer Richtung entlang einer Achse der Gewindespindel (1) aufnehmen,
   die Rollen (4b), die auf dem anderen Rollen-Rollweg (3b) angeordnet sind, eine Last in einer entgegengesetzten Richtung entgegengesetzt zu der einen Richtung entlang der Achse der Gewindespindel (1) aufnehmen, und
   die Gewindespindel (1) eine Steigung (1), die eine Bewegungsstrecke der Mutter (2) bei Drehung der Gewindespindel um eine Umdrehung ist, und eine Teilung (p) hat, die ein Abstand zwischen Gewindegängen ist, wobei diese durch die Gleichung

$$l = n \times p,$$

ausgedrückt werden, und dabei n eine ganze Zahl gleich oder größer 2 ist.

2. Rollengewindetrieb nach Anspruch 1, wobei in einem Querschnitt, der die Achse der Gewindespindel einschließt, sich ein Winkel, der durch die Achse der Gewindespindel (1) und eine Achsenlinie (10a, 10b) jeder der Rollen (4a, 4b) gebildet wird, die auf einem der Rollen-Rollwege (3a, 3b) angeordnet sind, von einem Winkel unterscheidet, der durch die Achse der Gewindespindel und eine Achsenlinie (10a, 10b) jeder der Rollen (4a, 4b) gebildet wird, die auf dem anderen Rollen-Rollweg (3a, 3b) angeordnet sind.

3.  Rollengewindetrieb nach Anspruch 1 oder 2, wobei jede der Vielzahl der Rollen (4a, 4b) zylindrisch geformt ist, und
    in dem Querschnitt, der die Achse der Gewindespindel (1) einschließt, der Winkel, der durch die Achse der Gewindespindel und die Achsenlinie (10a, 10b) jeder der Rollen (4a, 4b) gebildet wird, die auf dem einen Rollen-Rollweg (3a) angeordnet sind, auf einen anderen Winkel als 45° festgelegt ist, und der Winkel, der durch die Achse der Gewindespindel und die Achsenlinie (10a, 10b) jeder der Rollen (4a, 4b) gebildet wird, die auf dem anderen Rollen-Rollweg (3a, 3b) angeordnet sind, auf einen anderen Winkel als 45° festgelegt ist.

4.  Rollengewindetrieb nach einem der Ansprüche 1 bis 3, wobei
    eine Seitenfläche jeder der Rollen, die auf dem einen Rollen-Rollweg (3a) angeordnet sind, an einer Wandfläche eines Gewindegangs (1d, 2d) rollt, der an der Außenfläche der Gewindespindel ausgebildet ist, und eine Seitenfläche jeder der Rollen, die auf dem anderen Rollen-Rollweg (3b) angeordnet sind, an einer gegenüberliegenden Wandfläche des Gewindegangs (1d, 2d) der Gewindespindel rollt, und die Seitenfläche jeder der Rollen, die auf dem einen Rollen-Rollweg (3a) angeordnet sind, an einer Wandfläche eines Gewindegangs (1d, 2d) rollt, der an der Innenfläche der Mutter (2) ausgebildet ist, und die Seitenfläche jeder der Rollen, die auf dem anderen Rollen-Rollweg (3b) angeordnet sind, an einer gegenüberliegenden Wandfläche des Gewindegangs (1d, 2d) der Mutter (2) rollt.

5.  Rollengewindetrieb nach Anspruch 4, wobei zwischen Gewindegängen (1d, 2d) der Gewindespindel (1) oder/und der Mutter (2) ein zylindrischer Gewindegrund (1e, 2e) von Endflächen der Rollen entfernt in den Rollen-Rollwegen ausgebildet ist.

6.  Verfahren zum Herstellen eines Rollengewindetriebes (1), der eine Vielzahl von Rollen (4a, 4b) hat, die in zwei oder mehr Rollen-Rollteilen (3a, 3b) angeordnet sind, die zwischen Rollen-Rollflächen einer Gewindespindel und entsprechenden Rollen-Rollflächen einer Mutter ausgebildet sind, wobei das Verfahren die folgenden Schritte umfasst:

    paralleles Anordnen von Rollen (4a) der Vielzahl von Rollen (4a, 4b) in einer Reihe auf einem Rollen-Rollweg (3a) der Rollen-Rollwege (3a, 3b);
    paralleles Anordnen von Rollen (4b) der Vielzahl von Rollen (4a, 4b) in einer Reihe auf einem anderen Rollen-Rollweg (3b) der Rollen-Rollwege (3a, 3b);
    Ausüben einer Last in einer Richtung entlang einer Achse der Gewindespindel (1) auf die Rollen (4a) auf dem einen Rollen-Rollweg (3a); und
    Ausüben einer Last in einer entgegengesetzten Richtung entgegengesetzt zu der einen Richtung entlang der Achse der Gewindespindel auf die Rollen (4b) auf dem anderen Rollen-Rollweg (3b),
    wobei die Gewindespindel (1) eine Steigung (1), die eine Bewegungsstrecke der Mutter (2) bei Drehung der Gewindespindel um eine Umdrehung ist, und eine Teilung (p) hat, die ein Abstand zwischen Gewindegängen ist, wobei diese durch die Gleichung

    $$l = n \times p,$$

    ausgedrückt werden, und dabei n eine ganze Zahl gleich oder größer 2 ist.

**Revendications**

1.  Vis à rouleaux comprenant :

    une tige filetée (1) avec une surface extérieure sur laquelle sont formées en spirale deux surfaces de roulement pour rouleaux, ou plus ;
    un écrou (2) avec une surface intérieure sur laquelle sont formées en spirale deux surfaces de roulement pour rouleaux (3a, 3b), ou plus, qui font face aux surfaces de roulement respectives de la tige filetée ; et
    plusieurs rouleaux (4a, 4b) disposés dans deux chemins de roulement pour rouleaux (3a, 3b), ou plus, formés entre les surfaces de roulement pour rouleaux de la tige filetée (1) et les surfaces de roulement pour rouleaux respectives de l'écrou (2),
    étant précisé que les rouleaux (4a), parmi les rouleaux (4a, 4b), sont disposés parallèlement, en ligne, dans un chemin de roulement pour rouleaux (3a) parmi les chemins de roulement pour rouleaux (3a, 3b),
    que les rouleaux (4b), parmi les rouleaux (4a, 4b), sont disposés eux aussi parallèlement, en ligne, dans un autre chemin de roulement pour rouleaux (3b) parmi les chemins de roulement pour rouleaux (3a, 3b),

que les rouleaux (4a) disposés dans un chemin de roulement (3a) portent une charge dans une direction le long d'un axe de la tige filetée (1),

que les rouleaux (4b) disposés dans l'autre chemin de roulement (3b) portent une charge dans une direction opposée à la première direction le long de l'axe de la tige filetée (1), et

que la vis à rouleaux (1) a un pas d'hélice (1), qui désigne une distance de déplacement de l'écrou (2) quand la tige filetée fait un tour complet, et un pas de vis (p), qui désigne une distance entre des filets, exprimées par une équation : 1 = n x p, dans laquelle n est un nombre entier égal ou supérieur à 2.

2. vis à rouleaux selon la revendication 1, étant précisé que dans une coupe transversale incluant l'axe de la tige filetée, un angle formé par l'axe de la tige filetée (1) et une ligne axiale (10a, 10b) de chacun des rouleaux (4a, 4b) disposés dans un chemin de roulement (3a, 3b) est différent d'un angle formé par l'axe de la tige filetée et une ligne axiale (10a, 10b) de chacun des rouleaux (4a, 4b) disposés dans l'autre chemin de roulement (3b, 3a).

3. Vis à rouleaux selon la revendication 1 ou 2, étant précisé que chacun des rouleaux (4a, 4b) a une forme cylindrique, et

que dans la coupe transversale contenant l'axe de la tige filetée (1), l'angle formé par l'axe de la tige filetée et la ligne axiale (10a, 10b) de chacun des rouleaux (4a, 4b) disposés dans un chemin de roulement (3a) est fixé à une valeur différente de 45 degrés, et l'angle formé par l'axe de la tige filetée et la ligne axiale (10a, 10b) de chacun des rouleaux (4a, 4b) disposés dans l'autre chemin de roulement (3a, 3b) est fixé à une valeur différente de 45 degrés.

4. vis à rouleaux selon l'une quelconque des revendications 1 à 3, étant précisé

qu'une surface latérale de chacun des rouleaux disposés dans un chemin de roulement (3a) roule sur une surface de paroi d'un filet (1d, 2d) formé sur la surface extérieure de la tige filetée, et une surface latérale de chacun des rouleaux disposés dans l'autre chemin de roulement (3b) roule sur une surface de paroi opposée du filet (1d, 2d) de la tige filetée, et

que la surface latérale de chacun des rouleaux disposés dans un chemin de roulement (3a) roule sur une surface de paroi d'un filet (1d, 2d) formé sur la surface intérieure de l'écrou (2), et la surface latérale de chacun des rouleaux disposés dans l'autre chemin de roulement (3b) roule sur une surface de paroi opposée du filet (1d, 2d) de l'écrou (2).

5. Vis à rouleaux selon la revendication 4, étant précisé qu'entre les filets (1d, 2d) de la tige filetée (1) et/ou de l'écrou (2), un fond de filet cylindrique (le, 2e) est formé à l'opposé de surfaces d'extrémité des rouleaux dans les chemins de roulement.

6. Procédé pour fabriquer une vis à rouleaux (1) qui comporte plusieurs rouleaux (4a, 4b) disposés dans deux chemins de roulement pour rouleaux (3a, 3b), ou plus, formés entre les surfaces de roulement pour rouleaux d'une tige filetée et les surfaces de roulement pour rouleaux respectives d'un écrou, comprenant les étapes qui consistent :

à disposer parallèlement les rouleaux (4a), parmi les rouleaux (4a, 4b), en ligne dans un chemin de roulement (3a) parmi les chemins de roulement (3a, 3b) ;

à disposer parallèlement les rouleaux (4b), parmi les rouleaux (4a, 4b), en ligne dans un autre chemin de roulement (3b), parmi les chemins de roulement (3a, 3b) ;

à soumettre les rouleaux (4a) dans un chemin de roulement (3a) à une charge dans une direction le long d'un axe de la tige filetée (1) ; et

à soumettre les rouleaux (4b) dans l'autre chemin de roulement (3b) à une charge dans une direction opposée à la première direction le long de l'axe de la tige filetée,

étant précisé que la vis à rouleaux (1) a un pas d'hélice (1), qui désigne une distance de déplacement de l'écrou (2) quand la tige filetée fait un tour complet, et un pas de vis (p), qui désigne une distance entre des filets, exprimées par une équation : 1 = n x p, dans laquelle n est un nombre entier égal ou supérieur à 2.

## FIG.1

FIG.2

FIG.3

FIG.4

FIG.5

FIG.6

FIG.7

EP 1 916 449 B1

# FIG.8

FIG.9

FIG.10

FIG.11

EP 1 916 449 B1

FIG.12(B)

FIG.12(A)

FIG.13(A)

FIG.13(B)

FIG.14(A)

FIG.14(B)

EP 1 916 449 B1

FIG.15(A)　　　　FIG.15(B)

FIG.16(A)          FIG.16(B)

FIG.17(B)

FIG.17(A)

# FIG.18

X-X cross section

Y-Y cross section

Z-Z cross section

EP 1 916 449 B1

FIG.19

FIG.20

FIG.21

FIG.22

FIG.23

FIG.24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2001017062 A1
- JP 11210858 B